# EUROPEAN PATENT SPECIFICATION

(11) **EP 2 386 590 B1**
(45) Date of publication and mention of the grant of the patent: **29.10.2014**
(21) Application number: 09834864.2
(22) Date of filing: 22.12.2009
(51) Int. Cl.: C08G 77/04, C08F 2/28, C08F 18/08, C08L 31/04, C08L 83/04, C09D 4/00, C09D 7/12, C09D 201/00, B01J 13/22, C09D 183/04, C08K 9/08, B01J 13/18, C08F 218/08, C08G 77/14, C08G 77/18, C08K 7/22

(54) **COMPOSITE PARTICLES AND PROCESS FOR PRODUCING THE COMPOSITE PARTICLES**
VERBUNDPARTIKEL UND VERFAHREN ZUR HERSTELLUNG DER VERBUNDPARTIKEL
PARTICULES COMPOSITES ET PROCÉDÉ DE PRÉPARATION DE CES PARTICULES COMPOSITES

(30) Priority: 25.12.2008 JP 2008329049; 26.12.2008 JP 2008332683
(43) Date of publication of application: 16.11.2011
(60) Divisional application: 13171805.8
(73) Proprietor: Denki Kagaku Kogyo Kabushiki Kaisha, Tokyo 103-8338 (JP)
(72) Inventor: KAWASAKI Takashi, Omuta-shi Fukuoka 836-8510 (JP); FUKAZAWA Motoharu, Omuta-shi Fukuoka 836-8510 (JP); HANAZATO Shingo, Omuta-shi Fukuoka 836-8510 (JP); MIYATA Kouji, Omuta-shi Fukuoka 836-8510 (JP); SUGIMOTO Isao, Omuta-shi Fukuoka 836-8510 (JP)
(74) Representative: Gulde & Partner
(86) International application number: PCT/JP2009/071297
(87) International publication number: WO 2010/074063

(56) References cited:
- EP-A1- 1 064 088
- WO-A1-2007/099814
- WO-A1-2008/044462
- WO-A1-2008/143162
- JP-A- 6 142 491
- JP-A- 9 194 208
- JP-A- 63 202 631
- JP-A- 2001 233 611
- JP-A- 2005 263 550
- JP-A- 2006 256 921
- JP-A- 2006 335 605
- JP-A- 2008 200 869
- MARK J E ET AL: "REINFORCEMENT OF POLYDIMENTHYLSILOXANE NETWORKS BY BLENDED AND IN SITU GENERATED SILICA FILLERS HAVING VARIOUS SIZES, SIZE DISTRIBUTIONS AND MODIFIED SURFACES", RAPRA ABSTRACTS, RAPRA TECHNOLOGY LTD., SHREWSBURY, GB, vol. 36, no. 1, 1 January 1999 (1999-01-01), page 107, XP000800732, ISSN: 0033-6750

## Description

### Technical Field

The present invention relates to a composite particle and a process for producing the composite particle.

### Background Art

In recent years, as reduction in the size and layer of a variety of industrial components is progressed, reduction in the size of the raw materials to be used has been progressed. Also in a powder used as a variety of raw materials, fine particles whose particle size is several to several tens of nanometers are needed as the particles that form the powder.

Furthermore, because there are cases where required properties cannot be demonstrated by the particle composed of a single material, composite particles in combination of a plurality of materials are used in such a case. Particularly, the composite particles having a core-shell type structure are useful as a raw material for hollow particles or the like.

As a process for producing such composite particles, in Patent Literature 1, a process has been proposed in which spherical polymer particles are uniformly dispersed in an alcohol solution of titanium alkoxide and/or silicon alkoxide or a mixed solution of alcohol/water, and a uniform titanium compound or silicon compound coating layer is provided by a hydrolysis reaction on the surfaces of the spherical polymer particles. Moreover, in Non Patent Literatures 1 and 2, a process has been proposed in which formation of a silicon compound coating layer is performed in an alcohol solution. Further, in Non Patent Literature 3, a process has been proposed in which an amino group (-NH₂⁺) and a carboxyl group (-CO₂⁻) are introduced into the surfaces of several tens of nanometers of fine polystyrene particles, and subsequently the surfaces thereof are coated with silica.

Moreover, in recent years, hollow particles have been examined in many ways as filling materials such as anti-reflective materials, low dielectric constant materials, insulating materials, and carriers for a drug delivery system because of its low refractive index, low dielectric constant, and high porosity. While the hollow particles composed of a silicon compound such as silica have high chemical stability, the silica hollow particles whose particle size is several to several tens of nanometers have further high transparency, fluidity, and filling properties, and therefore are particularly importantly used.

While a variety of processes has been proposed as a process for producing the hollow particles whose particle size is several to several tens of nanometers, a process is ordinary in which the core particle of the core-shell particle whose shell (outer shell) is silica is removed, thereby to obtain silica particles whose inside is hollow. The process is referred to as a templating method because the process uses the core particle like a mold plate (template). Further, a process using an inorganic compound as the core particle is referred to as an inorganic templating method, and a process using an organic polymer is referred to as an organic templating method.

In the inorganic templating method, a process using a composite product of silica and other inorganic compound that can be dissolved by an acid or an acidic cation exchange resin to be removed as the core particle (Patent Literatures 2 and 3), a process using calcium carbonate (Patent Literatures 4 and 5), a process using zinc oxide (Patent Literature 6) and the like have been proposed.

Moreover, in the organic templating method, a process using a styrene polymer or a styrene/divinylbenzene copolymer as the core particle (Patent Literature 7), a process using the composite particles described in Patent Literature 1 above as the core-shell particles, and the like have been proposed.

Further, as a process for removing such organic polymer particle, a process for removing organic polymer particles by heating core-shell particles to thermally decompose or bum the organic polymer particles has been proposed (Patent Literatures 1 and 7). Moreover, a process has been examined in which core-shell particles are dried from a salt solution of sodium chloride or the like thereby to precipitate the salt between the core-shell particles; subsequently, the organic polymer particles are thermally decomposed by heating to turn the core-shell particles into hollow particles; then, the salt between the particles is removed by washing with water, thereby to obtain hollow particles in which aggregates are little (Non Patent Literature 1).

### Citation List

### Patent Literature

Patent Literature 1: Japanese Patent Application Laid-Open Publication No. 6-142491
Patent Literature 2: Japanese Patent Application Laid-Open Publication No. 2001-233611
Patent Literature 3: WO2006/009132
Patent Literature 4: Japanese Patent Application Laid-Open Publication No. 2005-263550
Patent Literature 5: Japanese Patent Application Laid-Open Publication No. 2006-256921
Patent Literature 6: Japanese Patent Application Laid-Open Publication No. 2006-335605
Patent Literature 7: National Publication of International Patent Application No. 2003-522621

### Non Patent Literature

Non Patent Literature 1: Journal of Chemical Engineeing of Japan, Vol. 37, No. 9, p. 1099 (2004)
Non Patent Literature 2: Chem.Mater., Vol. 2002, No.14, p. 1325
Non Patent Literature 3: Chemical Communication, p. 1010 (2003)
Non Patent Literature 4: Fresenius Jounal of Analytical Chemistry, Vol. 344, No. 6, p. 269 (1992)
Non Patent Literature 5: Langmuir, Vol. 2007, No. 23, p. 3062-3066
Non Patent Literature 6: Dai 4 han Jikkenkagakukouza 5 NMR (Experimental Chemistry Course of Study 5 NMR, fourth edition), p. 229 (1991)

### Summary of Invention

### Technical Problem

An object of the present invention is to provide an organic polymer-silicon compound composite particle in which aggregation is little and a process for producing the composite particle.

### Solution to Problem

Namely, the present invention provides organic polymer-silicon compound composite particles, each organic polymer-silicon compound composite particle comprising: (a) a core composed of organic polymer particles containing polyvinyl acetate as a principal component and (b) a shell containing a silicon compound, an average particle size of the organic polymer-silicon compound composite particles being 5 to 150 nm.

In the organic polymer-silicon compound composite particles having such a core-shell type structure, the core thereof is composed of organic polymer particles containing polyvinyl acetate as a principal component.

In the organic polymer-silicon compound composite particles according to the present invention, it is preferable that an average particle size of the above-mentioned core is 2 to 100 nm. Moreover, it is preferable that a thickness of the above-mentioned shell is 1 to 25 nm.

The present invention also provides a process for producing organic polymer-silicon compound composite particles, comprising coating surfaces of organic polymer particles obtained by emulsion polymerization using an organic polymer raw material, water, an emulsifier, and a water-soluble polymerization initiator with a silicon compound, wherein
the organic polymer raw material is vinyl acetate or a mixture of at least one of methacrylic acid and methyl methacrylate with vinyl acetate, and
the emulsion polymerization is performed under conditions (1) to (5) below:
(1) a mass of the organic polymer raw material is 0.1 to 10% of a mass of water,
(2) the emulsifier is a cationic surfactant,
(3) the water-soluble polymerization initiator is a water-soluble cationic polymerization initiator,
(4) a raw material for the silicon compound is an organic silicon compound that forms a silicic acid by hydrolysis, and
(5) hydrolysis of the organic silicon compound and polycondensation of the hydrolyzed product of the organic silicon compound on surfaces of the organic polymer particles are performed in an acidic solution at 10 to 60°C and a pH of 1 to 6.

As described above, in the production process described in Patent Literature 1 and Non Patent Literatures 1 and 2, it is proposed that formation of a silicon compound coating layer on the core particle is performed in an alcohol solution or an alcohol/water mixed solution. In the processes, however, a problem is that if organic polymer particles soluble in an alcohol are used as a core, the core is unintendedly dissolved in the alcohol during formation of the silicon compound coating layer, and for this reason, uniform composite particles cannot be obtained.

Moreover, as described above, in the production processes described in Non Patent Literature 3, a process has been proposed in which an amino group (-NH₂⁺) and a carboxyl group (-CO₂⁻) are introduced into the surfaces of several tens of nanometers of fine polystyrene particles, and subsequently the surfaces thereof are coated with silica. In the process, however, the produced composite particles are unintendedly aggregated. The aggregation is particularly remarkable in the case where composite particles whose diameter is less than 100 nm are produced; for example, in the composite particles whose diameter is 25 nm and those whose diameter is 40 nm, aggregation in which a string of several particles are connected to one another is observed in a transmission electron microscope image (see C and D of Fig. 1 in Non Patent Literature 3.). In the case where the composite particles in which such aggregation occurs are used as a filling material in optical application, reduction in optical properties may be caused.

Contrary to this, the process for producing organic polymer-silicon compound composite particles according to the present invention includes the above-mentioned structure, and therefore can produce uniform organic polymer-silicon compound composite particles without dissolving the above-mentioned organic polymer particles. Moreover, by using the organic polymer particles produced as above mentioned and performing coating under the above-mentioned predetermined conditions, the organic polymer-silicon compound composite particles can be produced with hardly causing aggregation. For this reason, the organic polymer-silicon compound composite particles produced according to the process for producing organic polymer-silicon compound composite particles according to the present invention can be suitably used as a filling material or the like in optical application, and are suitably used as a raw material in order to obtain uniform hollow particles.

Moreover, because the above-mentioned organic polymer particles are obtained by the above-mentioned particular emulsion polymerization, the organic polymer particles have a uniform particle size and the average circularity is higher. By using such organic polymer particles, the above-mentioned organic polymer-silicon compound composite particles have a uniform particle shape and a high average circularity, and the hollow particles obtained from the organic polymer-silicon compound composite particles also have a uniform particle shape and a high average circularity. Further, in the silicon compound coated under the above-mentioned predetermined conditions, the degree of condensation of silica in the silicon compound is lower.

In the process for producing organic polymer-silicon compound composite particles according to the present invention, it is preferable that a zeta potential of the organic polymer particles in an emulsion containing the organic polymer particles after emulsion polymerization is 10 to 100 mV in the case where the pH of the emulsion is 1 to 6. At a zeta potential within the above-mentioned range, coating of the above-mentioned silicon compound tends to be easily formed on the surfaces of the organic polymer particles. Moreover, because aggregation between the organic polymer particles hardly occurs, organic polymer-silicon compound composite particles having a uniform particle shape can be obtained more securely.

Moreover, in the process for producing organic polymer-silicon compound composite particles according to the present invention, it is preferable that a surface treatment by a silane coupling agent is performed on the above-mentioned organic polymer particles before the organic polymer particles are coated with the above-mentioned silicon compound. Moreover, it is preferable that the above-mentioned acidic solution contains fluoride ions. By these, coating properties of the above-mentioned silicon compound on the surfaces of the above-mentioned organic polymer particles are further accelerated.

Moreover, in the process for producing organic polymer-silicon compound composite particles according to the present invention, it is preferable that the pH of the above-mentioned acidic solution is adjusted by acetic acid. Acetic acid hardly makes a side reaction such as oxidation reaction even in the above-mentioned acidic solution, and ionic impurities are hardly mixed. For this reason, according to the above-mentioned acidic solution, the composite particles in which the content of impurities is small can be produced.

Further, in the process for producing organic polymer-silicon compound composite particles according to the present invention, it is preferable that after the surfaces of the above-mentioned organic polymer particles are coated with the above-mentioned silicon compound, at least one or more of the unreacted above-mentioned organic silicon compound, a hydrolyzed product of the above-mentioned organic silicon compound, and a low molecular weight polycondensate of the hydrolyzed product (hereinafter, referred to as a "target object to be removed" in some cases) is removed from a solution containing the above-mentioned organic polymer silicon compound composite particles. By removing these target objects to be removed from the solution, aggregation and/or gelation of the composite particles caused by crosslinking of the composite particles by a polycondensation reaction of the above-mentioned target objects to be removed or the like can be prevented.

### Advantageous Effects of Invention

According to the present invention, a powder composed of fine organic polymer-silicon compound composite particles in which aggregation is little and a process for producing the composite particles can be provided.

### Description of Embodiments

Hereinafter, suitable embodiments according to the present invention will be described.

### (Organic polymer-silicon compound composite particles)

Organic polymer-silicon compound composite particles according to the present embodiment (hereinafter, simply referred to as the "composite particles") each comprise (a) a core thereof composed of organic polymer particles containing polyvinyl acetate as a principal component and (b) a shell thereof composed of a silicon compound, the average particle size thereof being 5 to 150 nm.

In the composite particles having such a core-shell type structure, the core thereof is organic polymer particles containing polyvinyl acetate as a principal component; accordingly, the core can be easily removed by a process described later with hardly causing aggregation. For this reason, according to the above-mentioned composite particles, hollow particles in which aggregation is little can be produced. Moreover, because the shell thereof is composed of a silicon compound, the hollow particles obtained from the above-mentioned composite particles have high chemical stability. Moreover, because the shell thereof is composed of a silicon compound and average particle size thereof is 5 to 150 nm, the hollow particles obtained from the above-mentioned composite particles have high transparency, fluidity, and filling properties, and are suitably used as a low refractive index filling material in optical application, for example.

The "organic polymer particles containing polyvinyl acetate as a principal component" means that the organic polymer particles are mainly composed of polyvinyl acetate or that monomeric units that form the organic polymer particles are mainly vinyl acetate. It is preferable that the proportion of polyvinyl acetate to the organic polymer particles is not less than 60% by mass, and it is more preferable that the proportion is not less than 80% by mass. Moreover, it is preferable that the proportion of vinyl acetate to the monomeric units that form the organic polymer particle is not less than 60% by mass, and it is more preferable that the proportion is not less than 80% by mass. Thereby, removal of the core is easier.

Examples of the organic polymer particles include polyvinyl acetate, copolymers of vinyl acetate and other monomer, and polymer alloys. Here, as the other monomer, those compatible with vinyl acetate are preferable; examples of such a monomer include methyl methacrylate and methacrylic acid, and these two may be used at the same time.

It is preferable that the silicon compound contains silica because chemical stability is higher. Moreover, it is preferable that the silicon compound contains silica whose degree of condensation is low. In the hollow particles obtained from such composite particles, aggregation is little, and dispersibility in a solvent is good.

It is preferable that in the shell, the ratio (I_{Q2}/I_{Q4}) of the integrated intensity (I_{Q2}) of the peak (Q²) attributed to silicon in which the number of bridging oxygen is 2 to integrated intensity (I_{Q4}) of the peak (Q⁴) attributed to silicon in which the number of bridging oxygen is 4 in solid-state ²⁹Si-MAS-NMR measurement of the components of the shell is not less than 0.25 and not more than 1.0, and it is more preferable that the ratio is not less than 0.3 and not more than 0.8. Such a shell contains silica whose degree of condensation is low as a silicon compound. For this reason, in the hollow particles obtained from the composite particles including such a shell, aggregation is less, and dispersibility in a solvent is better.

It is more preferable that the average particle size of the composite particle is 20 to 100 nm. Moreover, in the composite particles, it is preferable that the average particle size of the core is 2 to 100 nm, and it is more preferable that the particle size is 15 to 80 nm. Further, it is preferable that the thickness of the shell is 1 to 25 nm, and it is more preferable that the thickness is 4 to 15 nm. Such composite particles are more suitable as a raw material for hollow particles used as a low refractive index filling material in optical application.

The average particle size of the composite particle, the average particle size of the core, and the thickness of the shell each can be measured using a transmission electron microscope (TEM). Specifically, with respect to the average particle size of the composite particle, diameters of 100 or more (for example, 100) particle images of the composite particles obtained using a transmission electron microscope are measured, and the average value is defined as the average particle size. Moreover, the composite particle is observed by the TEM to obtain a particle image having a contrast of two parts in which the inside of the particle image is circular and bright and the outside thereof is annular and dark. The outer diameter of the inner bright particle is considered as the diameter of the core, and the outer diameter of the dark annular part in the outside thereof is considered as the diameter of the composite particle.

Here, with respect to the diameter of the particle whose particle image is in a shape other than circular, the geometric mean value of a long diameter and a short diameter is considered as the diameter of the particle in the case where the shape is elliptical, and the geometric mean value of the longest diameter and the shortest diameter is considered as the diameter of the particle in the case where the shape is amorphous other than circular or elliptical. The thickness of the shell of the composite particle is defined as a value obtained by subtracting the diameter of the core from the diameter of the composite particles and dividing the difference by 2. Presence/absence of aggregation is checked by comparing the particle sizes before and after coating of the shell, the particle sizes being measured by a dynamic light scattering method in which conditions such as the concentration of the solid content, the composition of the solvent, and the measurement temperature are the same. The particle size is expressed in diameter, unless otherwise specified.

In the production process of the composite particles, usually, the organic polymer particles serving as the core are obtained; however, because the organic polymer particles significantly deform during pre-treatment (drying) if the organic polymer particles are observed by the TEM, observation by the TEM cannot be performed as they are.

The composite particle suitably has a core-shell type structure including the core composed of the organic polymer particles and the shell containing a silica component, and the core inside of the composite particle can be removed, thereby to obtain a hollow particle whose inside is hollow. In the case where the composite particle is expressed by an equivalent circle radius R, those containing more silica component in the outer portion of the composite particle, which is a portion from the surface to 30% of the composite particle, than in the inside thereof, which is a portion from the center to 70% of the composite particle, are preferable. If the silica component is larger in the inside, the hollow particles whose inside are hollow cannot be obtained. Moreover, in the case where the silica component exists in the outer portion that is a portion from the surface to 50% or more of the composite particle, the porous portion of the hollow particle is excessively small; thus, the properties as the hollow particles such as low refractive index and low dielectric constant may be poor. Moreover, if the silica component is large only in the outer portion that is a portion from the surface to 5% of the composite particle, the silica shell is excessively thin at the time of forming the hollow particles, and there is a risk of cracking.

It is preferable that the average circularity of the composite particles is 0.90 to 1.00, and it is more preferable that the average circularity is 0.95 to 1.00. At an average circularity smaller than the above-mentioned range, for example, in the case where a powder prepared by collecting the composite particles is used as a filling material, fluidity and filling properties may be insufficient, and properties intrinsic to the particles may not be able to be sufficiently demonstrated. In the process described in Patent Literature 1, because the alcohol solvent or alcohol/water mixed solution is used, dissolving of the core particle is caused more or less. For this reason, in the process described in Patent Literature 1, it is difficult to produce the composite particles according to the present embodiment such that the average circularity may be within the above-mentioned range. On the other hand, according to the process for producing composite particles described later, the composite particles according to the present embodiment can be produced such that the average circularity may be within the above-mentioned range.

The average circularity can be measured by directly taking the particle image by the transmission electron microscope into an image analyzer (for example, made by Nippon Avionics Co., Ltd.). In the case where direct taking-in of the particle image is difficult, measurement can be performed by taking in the copied image in which the outline of the particle image is copied onto a copying paper. Namely, the projected area (A) and circumferential length (PM) of the particle are measured from the particle image. If the area of a perfect circle with respect to the circumferential length (PM) is (B), the circularity of the particle can be expressed as A/B. Then, if a perfect circle having the same circumferential length as the circumferential length (PM) of a sample particle is presumed, PM = 2πr, B = πr², then B = π × (PM/2π)²; the circularity of each particle can be calculated as circularity = A/B = A × 4π/(PM)². The circularities of 100 or more particles are measured, and the average value is defined as the average circularity.

### (Process for producing composite particles)

The process for producing composite particles according to the present embodiment comprises a coating step of coating surfaces of organic polymer particles obtained by emulsion polymerization of an organic polymer raw material in the presence of water, an emulsifier, and a water-soluble polymerization initiator with a silicon compound.

The organic polymer raw material contains vinyl acetate. It is preferable that the proportion of vinyl acetate to the total amount of the organic polymer raw material is not less than 60% by mass, and it is more preferable that the proportion is not less than 80% by mass. As the organic polymer raw material other than vinyl acetate, those compatible with vinyl acetate are preferable. As such organic polymer raw materials, for example, methyl methacrylate or methacrylic acid is preferable, and these two may be used at the same time.

As the emulsifier, anionic surfactants such as sodium dodecyl sulfate, nonionic surfactants such as a block copolymer of polyoxyethylene and polyoxypropylene (Pluronic type), or cationic surfactants such as hexadecyltrimethylammonium bromide (hereinafter, abbreviated to "C16TAB") are used; among these, the cationic surfactants are preferable. As the cationic surfactants, C 16TAB and dodecyltrimethylammonium chloride (hereinafter, abbreviated to "C12TAC") are suitable.

As the water-soluble polymerization initiator, water-soluble anionic polymerization initiators such as potassium persulfate and sodium persulfate, and water-soluble cationic polymerization initiators such as 2,2'-azobis(2-methylpropionamidine) dihydrochloride (hereinafter, abbreviated to "AIBA") and 2,2-azobis(1-imino-1-pyrrolidino-2-methylpropane) dihydrochloride (hereinafter, abbreviated to "VA-067") are used; among these, water-soluble cationic polymerization initiators are preferable.

It is preferable that the amount of the organic polymer raw material used for emulsion polymerization is 0.1 to 10 parts by mass based on 100 parts by mass of the amount of water used for emulsion polymerization, and it is more preferable that the amount is 1 to 10 parts by mass. At an amount of the organic polymer raw material less than the above-mentioned lower limit value, productivity is low because the concentration of the organic polymer particles is low; at an amount of the organic polymer raw material more than the above-mentioned upper limit value, the organic polymer particles may aggregate each other to unintendedly produce particles whose average particle size is coarse.

Emulsion polymerization can be performed, for example, by adding the organic polymer raw material and the emulsifier to water, and then stirring the mixture to emulsify the mixture; heating the emulsified mixture while dissolved oxygen is removed through an inert gas such as gaseous nitrogen; and adding the water-soluble polymerization initiator after the temperature reaches a predetermined temperature, to initiate polymerization. The particle size of the organic polymer particles to be obtained by emulsion polymerization is several to several 100 nm. The particle size of the organic polymer particles to be obtained can be regulated mainly by the amount of the emulsifier and/or organic polymer raw material based on water; the particle size is smaller as the amount of the emulsifier is larger, and the particle size is smaller as the amount of the organic polymer raw material is smaller.

The above-mentioned predetermined temperature in the emulsion polymerization is preferably 40 to 70°C, and more preferably 50 to 60°C. Moreover, it is preferable that the emulsion polymerization uses a cationic surfactant as the emulsifier and uses a water-soluble cationic polymerization initiator as the water-soluble polymerization initiator. Further, C16TAB or C12TAC is suitable as the cationic surfactant, and AIBA is suitable as the water-soluble cationic polymerization initiator. According to the combination of the emulsifier and the water-soluble polymerization initiator, the surfaces of the organic polymer particles obtained by the emulsion polymerization are positively charged. As the specific amount of charging, the zeta potential of an acidic solution at a pH of 4 is 1 to 100 mV, and preferably 30 to 100 mV.

The surfaces of the organic polymer particles are positively charged; thereby, a coating reaction, namely, a polycondensation reaction of the hydrolyzed product of the raw material for a silicon compound can make in the surfaces of the organic polymer particles with priority in the case where the organic polymer particles are coated with a silicon compound.

The organic polymer particles may be subjected to a surface treatment by a silane coupling agent. In such organic polymer particles, coating with the silicon compound is easily formed on the surfaces thereof. As the silane coupling agent, epoxysilane based coupling agents, methacryloxysilane based coupling agents, aminosilane based coupling agent, and the like are used, and the epoxysilane based coupling agents such as (3-)glycidoxypropyltrimethoxysilane are particularly suitably used for the surface treatment of the organic polymer particles obtained by mainly using vinyl acetate as the organic polymer raw material.

At the coating step, the surfaces of the organic polymer particles are coated with the silicon compound. Preferably, the organic polymer particles and the organic silicon compound that can form a silicic acid by hydrolysis are kept in the acidic solution at a temperature of 10 to 60°C and a pH of 1 to 6, and the surfaces of the organic polymer particles are coated with a silicon compound. Examples of the silicic acid include orthosilicic acid (H₄SiO₄), metasilicic acid (H₂SiO₃), mesodisilicic acid (H₂Si₂O₅), mesotrisilicic acid (H₄Si₃O₈), and mesotetrosilicic acid (H₆Si₄O₁₁), and the organic silicon compound may be those that can form any of these. Moreover, silicic acids can also be expressed by [SiOₓ(OH)₄₋₂ₓ]ₙ (x is a number of 0 or more and 2 or less, and n is an integer of 1 or more).

The silicon compound formed by the process for producing composite particles according to the present embodiment contains silica (SiO₂) or silica as a principal component and a small amount of a silanol group (≡Si-OH) and/or an organic silicon group (≡Si-OR and/or ≡ Si-R).

As the raw material of the silicon compound, the organic silicon compound that can form a silicic acid by the hydrolysis reaction is suitably used. In the case where the organic silicon compound is used, coating with the silicon compound can be formed, for example, by polycondensating the silicic acid produced by the hydrolysis reaction of the organic silicon compound. Examples of such an organic silicon compound include alkoxysilanes such as tetramethoxysilane, tetraethoxysilane, tetraisopropoxysilane, and tetratertiarybutoxysilane; and tetraacetoxysilane. Among these, tetraethoxysilane (hereinafter, abbreviated to "TEOS") is suitably used. These organic silicon compounds form a silicic acid by the hydrolysis reaction, namely, a reaction with water. Because in the acidic solution, the silicic acid discharges hydrogen ions (H⁺) partially ionized to have positive charge, the silicic acid is negatively charged. For this reason, if the surfaces of the organic polymer particles are positively charged, the organic polymer particles are polycondensated after the silicic acid is attracted to surfaces of the particles by electrostatic attraction; accordingly, coating is easily produced on the surfaces of the organic polymer particles.

In order to further accelerate coating with silicon compound in the acidic solution, it is preferable that fluoride ions (F⁻) are added to the acidic solution. Examples of the method for adding fluoride ions include, for example, a method for adding a compound that contains fluoride ions and is dissolved in acidic solution and ionized to discharge fluoride ions to the acidic solution. Examples of such a compound include ammonium fluoride (NH₄F), sodium fluoride (NaF), and hydrogen fluoride (HF), and among these, NH₄F is particularly preferable.

In the process for producing composite particles according to the present embodiment, coating of the surfaces of the organic polymer particles with the silicon compound is performed in acidic solution. Contrary to this, as the conventional process for coating the surfaces of the organic polymer particles with a silicon compound, for example, a process has been proposed in which the surfaces of the particles are coated with a silane coupling agent, TEOS is added in the alcohol containing a small amount of water (for example, water:alcohol is approximately 5:95) under a basic condition (Non Patent Literature 2). Moreover, as an alternative process, a process is disclosed in which surfaces of acrylic organic polymer core particles (a copolymer of butyl methacrylate and butyl acrylate) are coated with silica in water (Non Patent Literature 5); the process for coating organic polymer particles with silica according to the present embodiment, however, is not disclosed or suggested.

A specific process for coating in an acidic solution at the coating step will be shown below. First, a liquid (emulsion) containing the organic polymer particles obtained by performing emulsion polymerization is diluted by water such that the concentration of the organic polymer particles may be a predetermined value, to obtain diluted water. The concentration of the organic polymer particles is preferably 0.1 to 5% by mass, and more preferably 0.2 to 3% by mass based on the total amount of the diluted water. Next, using an acid, the pH of the above-mentioned diluted solution is adjusted to 1 to 6, and preferably 2 to 5. As the acid used for adjustment of the pH, acetic acid is preferable because acetic acid hardly makes a side reaction such as an oxidation reaction and ionic impurities are hardly mixed. Moreover, at this time, it is preferable that adjustment of the pH is performed such that the zeta potential of the organic polymer particles in the diluted solution may be 1 to 100 mV.

Subsequently, an organic silicon compound such as TEOS is added to the diluted solution. At this time, it is preferable that the temperature of the diluted solution is 10 to 60°C, and it is more preferable that the temperature is 20 to 50°C. At a temperature less than 10°C, coating may not be sufficiently performed because the hydrolysis rate and polycondensation rate of the organic silicon compound are reduced; at a temperature more than 60°C, the organic polymer core particle may be softened and the shape of the particle cannot be kept.

The diluted solution to which the organic silicon compound is added is kept at 10 to 60°C for 1 to 10 hours, thereby to obtain the organic polymer particles whose surfaces are coated with the silicon compound, namely, the composite particles.

In the solution after the reaction, which contains the composite particles, the unreacted organic silicon compound, the hydrolyzed product of the organic silicon compound, the low molecular weight polycondensate of the organic silicon compound, and the like (hereinafter, collectively referred to as the "target object to be removed") exist. If the composite particles and these target objects to be removed exist together and are left as they are, the target objects to be removed may be hydrolyzed or polycondensated; thus, the composite particles are crosslinked to each other, causing aggregation or gelation of the particles. For this reason, it is preferable that after the composite particles are obtained, these target objects to be removed are immediately removed.

Examples of a specific method for removing the target objects to be removed include a method for performing ultrafiltration using a filtration membrane whose opening is slightly smaller than the particle size of the composite particle to be obtained, thereby to remove the target objects to be removed whose particle size is smaller than that of the composite particles, for example. It is also preferable for suppression of aggregation of the composite particles that during performing ultrafiltration, the pH of the solution containing the composite particles is adjusted to 1 to 6 and preferably to 2 to 5.

### Examples

Hereinafter, the present invention will be described more in detail using Examples, but the present invention will not be limited to the Examples.

### (Example 1-1)

### <Formation of organic polymer particles>

200 g of distilled water and 1 g of hexadecyltrimethylammonium bromide (C16TAB) were added to a separable flask with a volume of 300 mL, and stirred while gaseous nitrogen was bubbled. While bubbling and stirring were continued, 10 g of vinyl acetate was added at a point of time when 30 minutes passed; then, heating was started. At a point of time when the temperature of water reached 50°C, bubbling was stopped; 0.5 g of 2,2'-azobis(2-methylpropionamidine) dihydrochloride (AIBA) was dissolved in 10 g of distilled water and added. The temperature of water was kept at 50°C for 60 minutes while stirring was continued; then, cooling to room temperature was performed to obtain an emulsion containing organic polymer particles.

### <Formation of composite particles>

40 g of the obtained emulsion was taken out, and 150 g of distilled water was added to this to prepare a solution containing 1% by mass of the organic polymer particles; then, a small amount of acetic acid was dropped to adjust the pH at pH = 4. Next, using a zeta potential measurement apparatus (made by Sysmex Corporation, Zetasizer Nano-ZS), the zeta potential of the organic polymer particles in the solution was measured to be 52 mV. Then, while the temperature of the solution was kept at 40°C and the solution was stirred, 8 g of tetraethoxysilane (TEOS) was added thereto over 8 hours. Even after termination of addition, the solution was kept at 40°C for 5 hours while stirring was continued; then, the solution was cooled to room temperature, and coating with the silicon compound was terminated to obtain a solution containing composite particles. The solution after cooling was dropped onto a net (micro grid) for capturing a micro sample, dried, and then used for observation by a transmission electron microscope (TEM). Using a transmission electron microscope (made by JEOL Ltd., 2000FX), observation by the TEM was performed on the conditions of an accelerating voltage of 200 kV and an observation magnification of 200,000 times.

### <Evaluation>

By observation by the TEM, a particle image having a contrast of two parts in which the inside of the particle image was circular and bright and the outside thereof was annular and dark was obtained, and production of the composite particles comprising the core composed of vinyl acetate and the shell composed of the silicon compound was found. With respect to 100 particle images, the outer diameter of the inner bright particle and the outer diameter of the dark annular part in the outside thereof were measured; the average value of the outer diameter of the inner bright particle was defined as the diameter of the organic polymer particle, and the average value of the outer diameter of the dark annular part in the outside thereof was defined as the diameter of the composite particle; the value obtained by subtracting the diameter of the organic polymer particle from the diameter of the composite particle and dividing the difference by 2 was defined as the thickness of the shell of the composite particle; then, the diameter of the organic polymer particle was 37 nm, the diameter of the composite particle was 45 nm, and the thickness of the shell was 4 nm. A small amount of the solution immediately before the raw material for the silicon compound (TEOS) was added and a small amount of the solution immediately after coating with the silicon compound was terminated were taken, and an amount of change in the average particle size of the particles contained in the solution was measured by a dynamic light scattering apparatus (made by HORIBA, Ltd., LB-550); then, the amount of change was +9 nm ("+" designates an increase in the result of the solution immediately after termination of coating from the result of the solution "immediately before" the addition of the raw material for the silicon compound, while "-" designates a decrease therein. The same applies hereinafter.), and no remarkable aggregation of the particles accompanied by coating was caused.

### (Examples 1-2 to 1-6, Comparative Examples 1-1 and 1-2)

Composite particles were produced and evaluated in the same manner as in Example 1-1 except that the raw material to be used and part of the conditions were changed. The production conditions were shown in Table 1 and Table 2, and the evaluation results were shown in Table 3.

### (Example 1-7)

In the same manner as in Example 1-1, distilled water, C16TAB, vinyl acetate, and AIBA were added to a separable flask, the temperature of water was kept at 50°C for 60 minutes while stirring was continued, and then, cooling to room temperature was performed. Subsequently, 1 g of (3-)glycidoxypropyltrimethoxysilane (GPS) that was an epoxysilane based coupling agent was added, and stirred for 30 minutes; the temperature was raised to 40°C while stirring was continued, and kept for 60 minutes to perform a surface treatment by a silane coupling agent; then, cooling to room temperature was performed to obtain an emulsion containing organic polymer particles.

40 g of the obtained emulsion was taken out; in the same manner as in Example 1-1, distilled water and acetic acid were added to adjust the pH, and the zeta potential measurement, addition of TEOS, measurement of the particle size by the TEM, and measurement of the amount of change in the particle size by the dynamic light scattering apparatus were performed. The production conditions were shown in Table 1 and Table 2, and the evaluation results were shown in Table 3.

### (Example 1-8)

After an emulsion was produced in the same manner as in Example 1-1, 40 g of the obtained emulsion was taken out; distilled water and acetic acid were added to the emulsion to adjust the pH, and the zeta potential was measured; then, 0.02 g of ammonium fluoride (NH₄F) was add to the solution to introduce fluoride ions (F⁻). Subsequently, also in the same manner as in Example 1-1, addition of TEOS, measurement of the particle size by the TEM, and measurement of the amount of change in the particle size by the dynamic light scattering apparatus were performed. The production conditions were shown in Table 1 and Table 2, and the evaluation results were shown in Table 3.

### (Comparative Example 1-1)

An emulsion was produced in the same manner as in Example 1-1 except that 0.5 g of potassium persulfate (KPS) was used as the polymerization initiator instead of 0.5 g of AIBA. The zeta potential was 5 mV after distilled water and acetic acid were added to the taken-out emulsion to adjust the pH. Subsequently, TEOS was added and measurement of the particle size by the TEM was performed also in the same manner as in Example 1-1; then, no particle was observed, and no composite particle comprising an organic polymer core-silicon compound shell was formed.

### (Comparative Example 1-2)

An emulsion was produced in the same manner as in Example 1-1 except that 0.8 g of sodium dodecyl sulfate (SDS) was used as the emulsifier instead of 1 g of C16TAB. The zeta potential after distilled water and acetic acid were added to the taken-out emulsion to adjust the pH was -25 mV (negative). Subsequently, TEOS was added and measurement of the particle size by the TEM was performed also in the same manner as in Example 1-1; then, no particle was observed, and no composite particle comprising an organic polymer core-silicon compound shell was formed.

The materials used, which are written in abbreviated form in Table 1 and Table 2, are shown below. Moreover, "h" designates "hours" in Table 2.
VAc = vinyl acetate
MMA = methyl methacrylate
MA = methacrylic acid
C16TAB = (n-)hexadecyltrimethylammonium bromide
C12TAC = (n-)dodecyltrimethylammonium chloride
SDS = sodium dodecyl sulfate
AIBA = 2,2'-azobis(2-methylpropionamidine) dihydrochloride
VA-067 = 2,2-azobis(1-imino-1-pyrrolidino-2-methylpropane) dihydrochloride
KPS = potassium persulfate
TEOS = tetraethoxysilane
TMOS = tetramethoxysilane
GPS = (3-)glycidoxypropyltrimethoxysilane
NH₄F = ammonium fluoride

**[Table 1]**

| | Formation of organic polymer particles | | | | | | | |
|---|---|---|---|---|---|---|---|---|
| | Raw material monomer | Distilled water | Surfactant | Polymerization initiator | Amount of water for dissolving polymerization initiator | Silane coupling agent | Emulsion polymerization | |
| | | | | | | | Temperature | Time |
| Example 1-1 | VAc 10 g | 200 g | C16TAB 1 g | AIBA 0.5 g | 10 g | - | 50°C | 60 minutes |
| Example 1-2 | VAc 10 g | 200 g | C12TAC 10 g | AIBA 2 g | 20 g | - | 40°C | 90 minutes |
| Example 1-3 | VAc 20 g | 200 g | C16TAB 1 g | AIBA 0.5 g | 10 g | - | 50°C | 60 minutes |
| Example 1-4 | VAc 1.6 g | 200 g | C16TAB 0.2 g | AIBA 0.1 g | 2 g | - | 60°C | 60 minutes |
| | MMA 0.4 g | | | | | | | |
| Example 1-5 | VAc 8 g | 200 g | C16TAB 1 g | VA-067 0.7 g | 10 g | - | 70°C | 60 minutes |
| | MA 2 g | | | | | | | |
| Example 1-6 | VAc 6 g | 200 g | C16TAB 1 g | VA-067 0.7 g | 10 g | - | 65°C | 60 minutes |
| | MMA2g | | | | | | | |
| | MA2g | | | | | | | |
| Example 1-7 | VAc 10 g | 200 g | C16TAB 1 g | AIBA 0.5 g | 10 g | GPS 1 g | 50°C | 60 minutes |
| Example 1-8 | VAc 10 g | 200 g | C16TAB 1 g | AIBA 0.5 g | 10 g | - | 50°C | 60 minutes |
| Comparative Example 1-1 | VAc 10 g | 200 g | C16TAB 1 g | KPS 0.5 g | 10 g | - | 50°C | 60 minutes |
| Comparative Example 1-2 | VAc 10 g | 200 g | SDS 0.8 g | AIBA 0.5 g | 10 g | - | 50°C | 60 minutes |

**[Table 2]**

| | Formation of composite particles | | | | | | | |
|---|---|---|---|---|---|---|---|---|
| | Amount of emulsion to be taken out | Amount of distilled water to be added | Concentration of organic polymer particles | pH adjuster (pH after adjustment) | Fluoride ions | Raw material for silicon compound | Temperature and time to add raw material | Temperature and time to be kept after addition of raw material |
| Example 1-1 | 40 g | 150 g | 1 % by mass | Acetic acid (4) | - | TEOS 8 g | 40°C, 8h | 40°C, 5h |
| Example 1-2 | 40 g | 150 g | 1 % by mass | Nitric acid (3) | - | TMOS 10 g | 30°C, 8h | 30°C, 3h |
| Example 1-3 | 40 g | 150 g | 2 % by mass | Acetic acid (5) | - | TEOS 8 g | 40°C, 25h | 40°C, 5h |
| Example 1-4 | 200 g | - | 1 % by mass | Acetic acid (4) | - | TEOS 8 g | 40°C, 8h | 40°C, 5h |
| Example 1-5 | 40 g | 150 g | 1 % by mass | Acetic acid (4) | - | TEOS 8 g | 40°C, 8h | 40°C, 5h |
| Example 1-6 | 40 g | 150 g | 1 % by mass | Acetic acid (4) | - | TEOS 8 g | 40°C, 8h | 40°C, 5h |
| Example 1-7 | 40 g | 150 g | 1 % by mass | Acetic acid (4) | - | TEOS 8 g | 40°C, 8h | 40°C, 5h |
| Example 1-8 | 40 g | 150 g | 1 % by mass | Acetic acid (4) | NH₄F 0.02 g | TEOS 8 g | 40°C, 8h | 40°C, 5h |
| Comparative Example 1-1 | 40 g | 150 g | 1 % by mass | Acetic acid (4) | - | TEOS 8 g | 40°C, 8h | 40°C, 5h |
| Comparative Example 1-2 | 40 g | 150 g | 1 % by mass | Acetic acid (4) | - | TEOS 8 g | 40°C, 8h | 40°C, 5h |

**[Table 3]**

| | Zeta potential after pH adjustment | Average particle size of organic polymer particle (TEM) | Average particle size of composite particle (TEM) | Thickness of shell (TEM) | Amount of change in average particle size before and after coating shell (dynamic light scattering method) |
|---|---|---|---|---|---|
| Example 1-1 | 52 mV | 37 nm | 45 nm | 4 nm | +9 nm |
| Example 1-2 | 31 mV | 10 nm | 14 nm | 2 nm | +4 nm |
| Example 1-3 | 70 mV | 82 nm | 124 nm | 21 nm | +46 nm |
| Example 1-4 | 40 mV | 42 nm | 51 nm | 4.5 nm | +10 nm |
| Example 1-5 | 22 mV | 53 nm | 59 nm | 3 nm | +7 nm |
| Example 1-6 | 28 mV | 50 nm | 58 nm | 4 nm | +10 nm |
| Example 1-7 | 50 mV | 35 nm | 50 nm | 7.5 nm | +16 nm |
| Example 1-8 | 52 mV | 35 nm | 55 nm | 10 nm | +22 nm |
| Comparative Example 1-1 | 5 mV | - | - | - | - |
| Comparative Example 1-2 | -25 mV | - | - | - | - |

### (Example 1-9)

10 mL of the solution containing the composite particles, which was obtained in Example 1-1, was taken out; 0.5 mL of nitric acid (65% by mass) and 2 mL of a hydrogen peroxide solution (30% by mass) were added to the solution; using a microwave processor (made by Milestone General K.K., ETHOS One), a treatment for applying pressure and heating at a temperature of 200°C and a pressure of 3 MPa for 10 minutes was performed. The sample after the treatment was repeatedly subjected to centrifugal sedimentation and washing by distilled water until the pH of the sample reached pH = 7 to remove nitric acid, and was then dried to obtain a power; with respect to the powder thus obtained, the content of carbon was measured using a carbon analyzer (carbon analyzer (made by LECO Corporation, IR-412); as a result, it was found that the content of carbon was 0.18% by mass, and most of the organic polymer of the core was removed by the treatment for applying pressure and heating. Further, when the powder was observed by the TEM, the hollow particles whose size was approximately the same as that of the original composite particle were found, and it was found that the hollow silicon compound particles were obtained by the treatment for applying pressure and heating.

### (Comparative Example 1-3)

A solution containing composite particles was produced in the same manner as in Example 1-1 except that 9 g of butyl methacrylate and 1 g of butyl acrylate were used instead of 10 g of vinyl acetate in Example 1-1; 10 mL of this was taken out, and the treatment for applying pressure and heating was performed in the same manner as in Example 9, followed by washing and drying; the content of carbon in the powder thus obtained was measured; as a result, the content of carbon was 4.7% by mass, and the core of the organic polymer obtained from butyl methacrylate and butyl acrylate was not decomposed by the treatment for applying pressure and heating in Example 9.

### (Comparative Example 1-4)

Using 10 g of methyl methacrylate instead of butyl methacrylate and butyl acrylate in Comparative Example 1-3, a solution containing composite particles was produced in the same manner, followed by the treatment for applying pressure and heating, washing, and drying; the content of carbon in the powder thus obtained was measured; as a result, the content of carbon was 6.2% by mass.

### (Example 1-10, Comparative Example 1-5)

Using 1 L of a nitric acid acidic solution adjusted at a pH of 3 immediately after cooling a solution containing the composite particles obtained in Example 1-1, cross flow ultrafiltration was performed by a polysulfone hollow fiber filter with a molecular-weight cutoff of 1,000,000 (made by Spectrum Laboratories, Inc., KrosFlo). The solution containing the composite particles after filtration and the solution containing composite particles obtained in the same manner as in Comparative Example 1-4 (not subjected to ultrafiltration) were kept at room temperature. As a result, the solution after filtration did not cause gelation or aggregation even after one week, while the solution not subjected to filtration was gelled after one day.

According to the present invention, the powder composed of fine composite particles in which aggregation is little, and the slurry prepared by dispersing this are obtained.

### (Example 2-1)

### <Formation of organic polymer particles>

200 g of distilled water and 1 g of hexadecyltrimethylammonium bromide (C16TAB) were added to a separable flask with a volume of 300 mL, and stirring was performed while gaseous nitrogen was bubbled. While bubbling and stirring were continued, 10 g of vinyl acetate was added at a point of time when 30 minutes passed; then, heating was started. At a point of time when the temperature of water reached 50°C, bubbling was stopped; 0.5 g of 2,2'-azobis(2-methylpropionamidine) dihydrochloride (AIBA) was dissolved in 10 g of distilled water, and added. The temperature of water was kept at 50°C for 60 minutes while stirring was continued; then, cooling to room temperature was performed to obtain an emulsion containing organic polymer particles.

### <Formation of composite particles>

40 g of the obtained emulsion was taken out, and 150 g of distilled water was added to this to prepare a solution containing 1% by mass of the organic polymer particles; then, a small amount of acetic acid was dropped to adjust the pH at pH = 4. Next, using a zeta potential measurement apparatus (made by Sysmex Corporation, Zetasizer Nano-ZS), the zeta potential of the organic polymer particles in the solution was measured to be 52 mV. Then, while the temperature of the solution was kept at 40°C and the solution was stirred, 8 g of tetraethoxysilane (TEOS) was added thereto over 8 hours. Even after termination of addition, the solution was kept at 40°C for 5 hours while stirring was continued; then, the solution was cooled to room temperature, and coating with the silicon compound was terminated to obtain a solution containing composite particles. The solution after cooling was dropped onto a net (micro grid) for capturing a micro sample, dried, and then used for observation by a transmission electron microscope (TEM). Using a transmission electron microscope (made by JEOL Ltd., 2000FX), observation by the TEM was performed on the conditions of an accelerating voltage of 200 kV and an observation magnification of 200,000 times.

By observation by the TEM, a particle image having a contrast of two parts in which the inside of the particle image was circular and bright and the outside thereof was annular and dark was obtained, and production of the composite particles comprising the core composed of vinyl acetate and the shell composed of the silicon compound was found. With respect to 100 particle images, the outer diameter of the inner bright particle and the outer diameter of the dark annular part in the outside thereof were measured; the average value of the outer diameter of the inner bright particle was defined as the diameter of the organic polymer particle, and the average value of the outer diameter of the dark annular part in the outside thereof was defined as the diameter of the composite particle; the value obtained by subtracting the diameter of the organic polymer particle from the diameter of the composite particle and dividing the difference by 2 was defined as the thickness of the shell of the composite particle; then, the diameter of the organic polymer particle was 37 nm, the diameter of the composite particle was 45 nm, and the thickness of the shell was 4 nm. A small amount of the solution immediately before the raw material for the silicon compound (TEOS) was added and a small amount of the solution immediately after coating with the silicon compound was terminated were taken, and an amount of change in the average particle size of the particles contained in the solution was measured by a dynamic light scattering apparatus (made by HORIBA, Ltd., LB-550); then, the amount of change was +9 nm ("+" designates an increase in the result of the solution immediately after termination of coating from the result of the solution "immediately before" the addition of the raw material for the silicon compound, while "-" designates a decrease therein. The same applies hereinafter.), and no remarkable aggregation of the particles accompanied by coating was caused.

### Industrial Applicability

The composite particles obtained in the present invention can be suitably used as a raw material for hollow silica spherical particles used as a low refractive index filling material in optical application.

## Claims

1. An organic polymer-silicon compound composite particle comprising (a) a core composed of an organic polymer particle containing polyvinyl acetate as a principal component and (b) a shell containing a silicon compound, an average particle size of the organic polymer-silicon compound composite particle being 5 to 150 run.

2. The organic polymer-silicon compound composite particle according to claim 1, wherein an average particle size of the core is 2 to 100 nm.

3. The organic polymer-silicon compound composite particle according to claim 1 or 2, wherein a thickness of the shell is 1 to 25 nm.

4. A process for producing an organic polymer-silicon compound composite particle according to any one of claims 1 to 3, comprising coating surface of an organic polymer particle obtained by emulsion polymerization using an organic polymer raw material, water, an emulsifier, and a water-soluble polymerization initiator with a silicon compound, wherein
the organic polymer raw material is vinyl acetate or a mixture of at least one of methacrylic acid and methyl methacrylate with vinyl acetate, and
the emulsion polymerization is performed under conditions (1) to (5) below:
(1) a mass of the organic polymer raw material is 0.1 to 10% of a mass of water,
(2) the emulsifier is a cationic surfactant,
(3) the water-soluble polymerization initiator is a water-soluble cationic polymerization initiator,
(4) a raw material for the silicon compound is an organic silicon compound that forms a silicic acid by hydrolysis, and
(5) hydrolysis of the organic silicon compound and polycondensation of a hydrolyzed product of the organic silicon compound on surface of the organic polymer particle are performed in an acidic solution at 10 to 60°C and a pH of 1 to 6.

5. The process according to claim 4, wherein a zeta potential of the organic polymer particle in an emulsion containing the organic polymer particle after emulsion polymerization is 10 to 100 mV in a case where a pH of the emulsion is 1 to 6.

6. The process according to claim 4 or 5, wherein a surface treatment by a silane coupling agent is performed on the organic polymer particle before the organic polymer particle is coated with the silicon compound.

7. The process according to any one of claims 4 to 6, wherein the acidic solution contains fluoride ions.

8. The process according to any one of claims 4 to 7, wherein a pH of the acidic solution is adjusted by acetic acid.

9. The process according to any one of claims 4 to 8, wherein after the surface of the organic polymer particle are coated with the silicon compound, at least one or more of the unreacted organic silicon compound, a hydrolyzed product of the organic silicon compound, and a low molecular weight polycondensate of the hydrolyzed product is removed from a solution containing the organic polymer silicon compound composite particle.

## Patentansprüche

1. Organisches Polymer-Silicium-Verbundpartikel, umfassend: (a) einen Kern, der aus einem organischen Polymerpartikel zusammengesetzt ist, das Polyvinylacetat als Hauptbestandteil enthält, und (b) eine Hülle, die eine Siliciumverbindung enthält, wobei eine durchschnittliche Partikelgröße des Verbundpartikels aus einer Verbindung aus organischem Polymer und Silicium 5 bis 150 nm beträgt.

2. Organisches Polymer-Silicium-Verbundpartikel nach Anspruch 1, wobei eine durchschnittliche Partikelgröße des Kerns 2 bis 100 nm beträgt.

3. Organisches Polymer-Silicium-Verbundpartikel nach Anspruch 1 oder 2, wobei eine Dicke der Hülle 1 bis 25 nm beträgt..

4. Verfahren zur Herstellung eines organischen Polymer-Silicium-Verbundpartikels nach einem der Ansprüche 1 bis 3, umfassend das Beschichten der Oberfläche eines organischen Polymerpartikels, das durch Emulsionspolymerisation unter Verwendung eines Ausgangsmaterials für das organische Polymer, von Wasser, eines Emulgators und eines wasserlöslichen Polymerisationsinitiators gewonnen wird, mit einer Siliciumverbindung, wobei
das Ausgangsmaterial für das organische Polymer Vinylacetat oder ein Gemisch aus Methacrylsäure und/oder Methylmethacrylat mit Vinylacetat ist, und
die Emulsionspolymerisation unter den nachstehenden Bedingungen (1) bis (5) erfolgt:
(1) eine Masse des Ausgangsmaterials für das organische Polymer beträgt 0,1 bis 10% einer Masse von Wasser,
(2) der Emulgator ist ein kationisches Tensid,
(3) der wasserlösliche Polymerisationsinitiator ist ein wasserlöslicher kationischer Polymerisationsinitiator.
(4) ein Ausgangsmaterial für die Siliciumverbindung ist eine organische Siliciumverbindung, die durch Hydrolyse eine Kieselsäure bildet, und
(5) die Hydrolyse der organischen Siliciumverbindung und die Polykondensation eines hydrolysierten Produkts der organischen Siliciumverbindung auf der Oberfläche des organischen Polymerpartikels erfolgen in einer sauren Lösung bei 10 bis 60°C und bei einem pH-Wert von 1 bis 6.

5. Verfahren nach Anspruch 4, wobei ein Zeta-Potential des organischen Polymerpartikels in einer Emulsion, die das organische Polymerpartikel enthält, nach der Emulsionspolymerisation 10 bis 100 mV beträgt, wenn ein pH-Wert der Emulsion 1 bis 6 beträgt.

6. Verfahren nach Anspruch 4 oder 5, wobei eine Oberflächenbchandlung mit einem Silanhaftvermittler an dem organischen Polymerpartikel erfolgt, bevor das organische Polymerpartikel mit der Siliciumverbindung beschichtet wird.

7. Verfahren nach einem der Ansprüche 4 bis 6, wobei die saure Lösung Fluoridionen enthält.

8. Verfahren nach einem der Ansprüche 4 bis 7, wobei ein pH-Wert der sauren Lösung mit Essigsäure eingestellt wird.

9. Verfahren nach einem der Ansprüche 4 bis 8, wobei nach der Beschichtung der Oberfläche des organischen Polymerpartikels mit der Siliciumverbindung die nicht umgesetzte organische Siliciumverbindung, ein hydrolysiertes Produkt der organischen Siliciumverbindung und/oder ein Polykondensat des hydrolysierten Produkts mit geringen Molekulargewicht aus einer Lösung entfernt werden, die das organische Polymer-Silicium-Verbundpartikel enthält.

## Revendications

1. Particule composite de composé de silicium-polymère organique comprenant (a) un noyau composé d'une particule polymère organique contenant de l'acétate de polyvinyle en tant que composant principal et (b) une enveloppe contenant un composé de silicium, une taille de particule moyenne de la particule composite de composé de silicium-polymère organique étant comprise entre 5 et 150 nm.

2. Particule composite de composé de silicium-polymère organique selon la revendication 1, dans laquelle une taille de particule moyenne du noyau est comprise entre 2 et 100 nm.

3. Particule composite de composé de silicium-polymère organique selon la revendication 1 ou 2, dans laquelle une épaisseur du noyau de l'enveloppe est comprise entre 1 et 25 nm.

4. Processus de production d'une particule composite de composé de siliciumpolymère organique selon l'une quelconque des revendications 1 à 3, comprenant le revêtement de surface d'une particule polymère organique obtenue par polymérisation en émulsion à l'aide d'un matériau brut polymère organique, de l'eau, un émulsifiant, et un initiateur de polymérisation soluble dans l'eau avec un composé de silicium, dans lequel
le matériau brut polymère organique est de l'acétate de vinyle ou un mélange d'au moins un composant parmi l'acide méthacrylique et le méthacrylate de méthyle avec de l'acétate de vinyle, et
la polymérisation en émulsion est effectuée dans les conditions (1) à (5) ci-dessous :
(1) une masse du matériau brut polymère organique est égale à 0,1 à 10 % d'une masse d'eau,
(2) l'émulsiliant est un agent tensio-actif cationique,
(3) l'initiateur de polymérisation soluble dans l'eau est un initiateur de polymérisation cationique soluble dans l'eau,
(4) un matériau brut pour le composé de silicium est un composé de silicium organique qui forme un acide silicique par hydrolyse, et
(5) une hydrolyse du composé de silicium organique et une polycondensation d'un produit hydrolysé du composé de silicium organique à la surface de la particule polymère organique sont effectuées dans une solution acide entre 10 et 60 °C et à un pH entre 1 et 6.

5. Processus selon la revendication 4, dans lequel un potentiel zêta de la particule polymère organique dans une émuision contenant la particule polymère organique après polymérisation en émulsion est compris entre 10 et 100 mV dans un cas où un pH de l'émulsion est compris entre 1 et 6.

6. Processus selon la revendication 4 ou 5, dans lequel un traitement de surface par un agent de couplage silane est effectué sur la particule poiymère organique avant que la particule polymère organique ne soit revêtue avec le composé de silicium.

7. Processus selon l'une quelconque des revendications 4 à 6, dans lequel la solution acide contient des ions fluorure.

8. Processus selon l'une quelconque des revendications 4 à 7 dans lequel un pH de la solution acide est ajusté par de l'acide acétique.

9. Processus selon l'une quelconque des revandications 4 à 8, dans lequel, après que la surface de la particule polymère organique a été revêtue avec le composé de silicium, au moins un ou plusieurs éléments parmi le composé de silicium organique qui n'a pas réagi, un produit hydrolysé du composé de silicium organique, et un polycondensat à faible poids moléculaire du produit hydrolysé est enlevé d'une solution contenant la particule composite de composé de silicium-polymère organique.
